# DEMANDE DE BREVET EUROPEEN

(11) **EP 0 564 332 A1**
(43) Date de publication de la demande: **06.10.1993**
(21) Numéro de dépôt: 93400782.4
(22) Date de dépôt: 25.03.1993
(51) Int. Cl.: D03D 15/00, D04B 1/14, D02G 3/44, D04H 1/42, B29C 67/12

(54) **Renfort textile à pertes électriques contrôlées**

(30) Priorité: 31.03.1992 FR 9203905
(71) Demandeur: BROCHIER S.A., F-69150 Décines Cédex (FR)
(72) Inventeur: Abbe, Daniel, F-91400 Saclay (FR); Aucagne, Jean, F-38110 La Tour du Pin (FR); Bompard, Bruno, F-69003 Lyon (FR); Boust, Fabrice, F-92350 Le Plessis Robinson (FR)
(74) Mandataire: Phélip, Bruno

(57) **Abrégé**

La présente invention concerne un renfort textile à pertes électriques contrôlées comprenant :
- des fils non conducteurs (1) à base de fibres minérales assurant la résistance mécanique et thermique du textile,
- et des fils chargés (2),

caractérisé en ce que les fils chargés (2) sont constitués d'un mélange de fibres discontinues non conductrices minérales (6) et de fibres discontinues conductrices (4) approximativement parallèles, dans une proportion déterminée pour donner au textile ses propriétés électriques.

## Description

L'invention concerne un renfort textile à pertes électriques contrôlées.

Pour des matériaux homogènes, les pertes électriques sont classiquement représentées par la conductivité électrique. Dans le cas de milieux ou d'éléments hétérogènes, tels que les textiles, cette grandeur physique intrinsèque n'est pas toujours définissable. On désigne ici par "pertes électriques" l'aptitude d'un matériau à dissiper de l'énergie par déplacements de charges. Ces pertes électriques font partie des propriétés électriques du matériau.

On a proposé depuis longtemps la fabrication et l'utilisation de textiles comportant des fils chargés.

On appelle ici "textile" tout ensemble unitaire de fibres qu'il soit tissé, tricoté, non tissé ou autre, quel que soit le mode d'assemblage des fibres.

De tels textiles peuvent recevoir de nombreuses applications. Ils peuvent être utilisés comme éléments chauffants, être utilisés pour éviter l'accumulation d'électricité statique, permettre le blindage électromagnétique d'appareils informatiques, électroménagers,....

De tels tissus ont par exemple été décrits dans le brevet FR-2.263.658. Plus récemment, il a été proposé de réaliser de tels textiles comprenant des fibres de carbone (FR-2.588.575, FR-2.614.045, FR-2.614.046).

De nombreuses propositions ont été faites permettant d'assurer la conductivité des textiles. Par exemple, il a été proposé de surimprimer sur un tissu enduit une composition d'impression comportant des pigments métalliques (FR-2.608.646).

On a également proposé la fabrication d'une fibre textile conductrice composée d'un filament synthétique recouvert d'une gaine de polymères dans laquelle des particules conductrices sont uniformément réparties (US-1.439.837).

On a également proposé d'imprégner un tissu de fibres de verre avec une matière organique. L'ensemble est ensuite pyrolysé de manière à convertir la matière organique en carbone pur déposé sur les fibres de verre (US-4.510.077).

On a encore proposé la fabrication d'un fil à double constituant, l'un chargé, l'autre non conducteur, chacun formant un fil continu, collé l'un à l'autre uniquement le long d'une ligne de contact (FR-2.466.517).

Selon la demande de brevet EP-0.401.739, il est proposé de fabriquer une fibre conductrice par gaufrage de filaments, respectivement chargés et non conducteurs.

Enfin, selon le brevet US-4.606.968, il est proposé d'introduire des fils chargés dans une base textile de telle sorte que ces fils chargés soient en relief par rapport à la surface apparente de cette base textile.

Chacune de ces techniques antérieures a ses qualités propres, mais aucune ne permet de contrôler avec une précision suffisante la conductivité électrique du renfort textile.

Un objectif de la présente invention est la réalisation d'un renfort textile, dont les propriétés électriques à basse et haute fréquence sont aisément réglables.

Un autre objectif de la présente invention est de proposer un renfort textile qui, tout en ayant des propriétés électriques contrôlées, ait également une bonne résistance mécanique et/ou une bonne résistance thermique, réalisant ainsi un textile multifonctionnel.

A cet effet, l'invention concerne un renfort textile à propriétés électriques contrôlées comprenant des fils isolants à base de fibres minérales assurant la résistance mécanique et thermique du textile, et des fils chargés.

Selon l'invention, les fils chargés sont constitués d'un mélange de fibres discontinues non conductrices et de fibres discontinues conductrices approximativement parallèles, dans une proportion déterminée pour donner au textile ses propriétés électriques.

Dans un premier mode de réalisation préféré, les fibres des fils chargés sont tordues pour donner aux fils une grande cohésion.

Dans un autre mode de réalisation préféré, les fils chargés comportent chacun deux bouts assemblés par torsion, l'un au moins de ces bouts étant formé d'un mélange de fibres discontinues non conductrices et de fibres discontinues conductrices parallèles.

Dans un autre mode de réalisation préféré, les fils chargés sont guipés.

L'invention sera décrite plus en détail, en référence aux dessins annexés, dans lesquels :

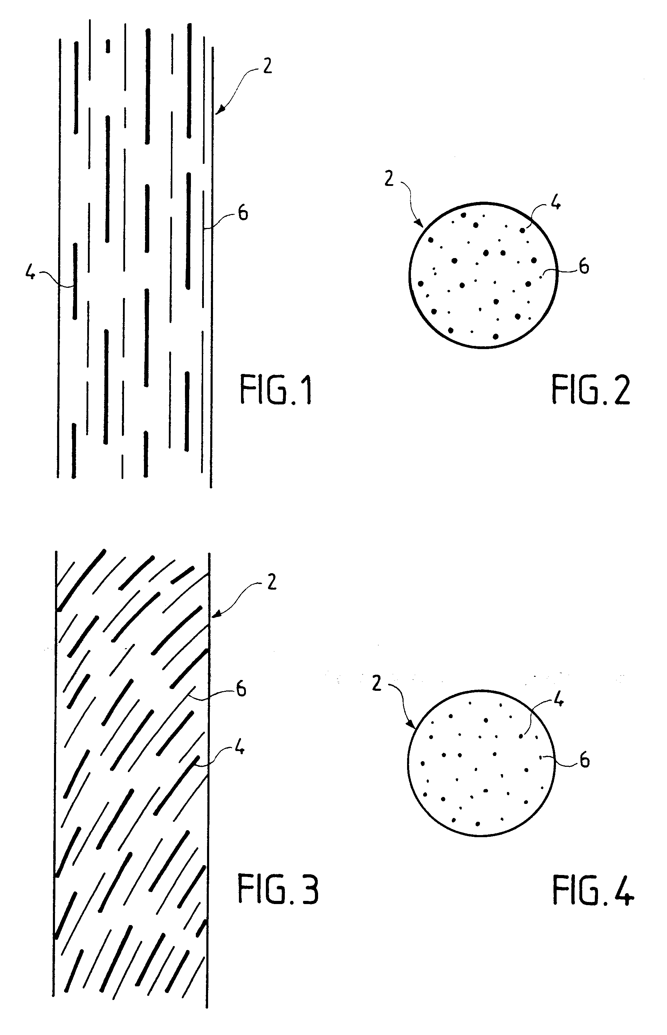

- la Figure 1 est une représentation schématique en coupe droite d'un fil chargé sans torsion mis en oeuvre selon l'invention ;
- la Figure 2 est une vue en coupe horizontale du fil de la Figure 1 ;
- la Figure 3 est une vue en coupe droite du fil chargé, lorsque les fibres sont tordues ;
- la Figure 4 est une vue en coupe horizontale du fil de la Figure 3 ;

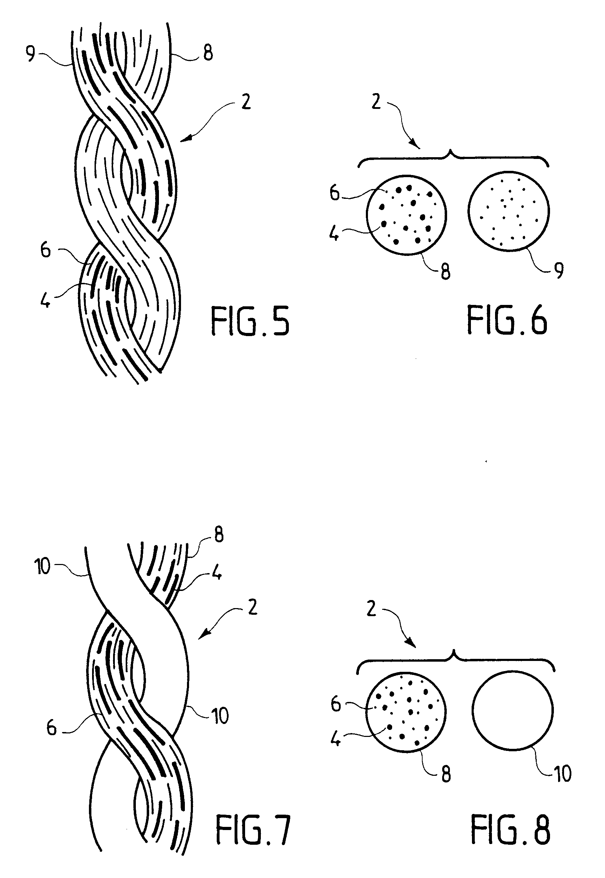

- la Figure 5 est une vue en coupe du fil chargé mis en oeuvre selon l'invention, lorsqu'il comporte deux bouts ;
- la Figure 6 est une vue en coupe horizontale du fil de la Figure 5 ;
- la Figure 7 est une vue en coupe droite du fil chargé de l'invention, lorsqu'il comporte un multifilament continu ;
- la Figure 8 est une vue en coupe horizontale du fil de la Figure 7 ;
- la Figure 9 est une vue en coupe droite du fil chargé mis en oeuvre selon l'invention, lorsqu'il est guipé ;
- la Figure 10 est une vue en coupe horizontale du fil de la Figure 9 ;
- les Figures 11 à 13 représentent la position des fils chargés dans différents modes de réalisation du textile de l'invention ;
- la Figure 14 représente une vue en coupe d'un matériau composite incluant des couches textiles conformes à l'invention ;
- les Figures 15 à 17 représentent la proportion d'énergie réfléchie par un textile, conforme à différents modes de réalisation de l'invention, en fonction de la longueur d'onde d'une onde incidente, exprimée en cm.

Le renfort textile selon l'invention a des propriétés électriques contrôlées. Le niveau de ces pertes électriques dépend de l'application du renfort textile. Il est par exemple connu qu'un textile utilisé pour assurer un blindage doit être très conducteur, alors qu'un textile, destiné à des applications antistatiques ou produisant une réflexion faible de l'énergie électromagnétique à haute fréquence, nécessite des pertes électriques beaucoup plus modérées.

Ce renfort textile comprend des fils non conducteurs ou isolants 1 et des fils chargés 2.

Les fils non conducteurs 1 assurent pour l'essentiel la résistance mécanique et/ou thermique du textile. Ces fils non conducteurs 1 sont donc choisis en fonction des propriétés mécaniques et/ou thermiques que l'on souhaite donner au textile. On choisit généralement des fibres de verre, sous forme continue (silionne) ou discontinue (verranne), mais on peut également utiliser d'autres fibres, telles que des fibres de silice, de céramique ou tout autre fibre faiblement conductrice.

C'est cette famille de fibres que l'on désigne par "fibres minérales".

Ces fibres pourront être texturées, c'est-à-dire que l'alignement de chaque filament est aléatoire, ou encore non texturées.

Les fils chargés 2 sont constitués d'un mélange de fibres discontinues non conductrices 6 et de fibres discontinues conductrices 4. On entend ici par "discontinues" des fibres dont la longueur moyenne est comprise entre 5 et 200 mm.

Les fibres discontinues conductrices 4 sont des fibres de carbone, des fibres métalliques (aluminium, acier, cuivre, or...), ou plus généralement des fibres de conductivité supérieure à 10³ Ω⁻¹ m⁻¹.

Les fibres discontinues non conductrices 6 sont des fibres de verre, des fibres de silice, fibres de céramique, ou plus généralement des fibres de conductivité inférieure à 1 Ω⁻¹ m⁻¹.

Les fibres discontinues conductrices 4 et les fibres discontinues non conductrices 6 sont approximativement parallèles et leur proportion est déterminée pour donner aux textiles les propriétés électriques recherchées.

Ainsi, les fils chargés ne sont pas nécessairement conducteurs en continu, mais ils permettent la réalisation de textile présentant les pertes désirées.

On peut ainsi fabriquer différents "fils chargés" dont la concentration massique en éléments conducteurs est comprise entre 0,2 et 80 % dans le cas de fibres de verre et de carbone, par exemple, pour obtenir des tissus dont les pertes à haute fréquence sont dans les classes des conductivités apparentes comprises entre quelques dizièmes de Ω⁻¹ m⁻¹ et quelques centaines de Ω⁻¹ m⁻¹.

De préférence, le diamètre des fibres discontinues 4, 6 conductrices ou non conductrices est compris entre 1 et 30 microns.

Le mélange des fibres discontinues 4, 6 utilisé pour la fabrication du fil chargé 2 est de préférence réalisé en filature. Une mèche hybride, dont toutes les fibres sont approximativement parallèles, dans les proportions voulues, est obtenue par étirages successifs. De préférence, cette mèche peut être directement utilisée pour la fabrication du textile, mais il peut être préféré de lui donner une torsion sur elle-même, afin qu'elle acquiert une meilleure cohésion et une certaine résistance mécanique facilitant les opérations ultérieures de tissage, tricotage, aiguilletage....

On peut également à partir de cette mèche fabriquer un fil à deux bouts 8, 9 par une torsion inverse des mèches 8, 9.

On peut encore assembler une mèche hybride 8 avec un monofilament 10. Afin d'améliorer la cohésion et la résistance mécanique de la mèche hybride de filature et de faciliter son tissage, un guipage peut être réalisé.

Le fil de guipage 12 peut être un fil minéral ou synthétique, continu ou discontinu. Il peut être également un fil fusible ou soluble renforçant la cohésion de la mèche lors du tissage et pouvant être éliminé une fois la structure réalisée.

Le textile de l'invention réalisé avec des fils non conducteurs 1 et des fils chargés 2 peut présenter différents motifs ; c'est-à-dire que le choix des positions, orientations et densité de ces fils permet la réalisation de motifs.

Selon les applications envisagées, la densité et la position des fils chargés est convenablement choisie. Ils peuvent être dans le sens transverse (fil de trame par exemple), dans le sens longitudinal (fil de chaîne par exemple), ou simultanément dans les deux sens.

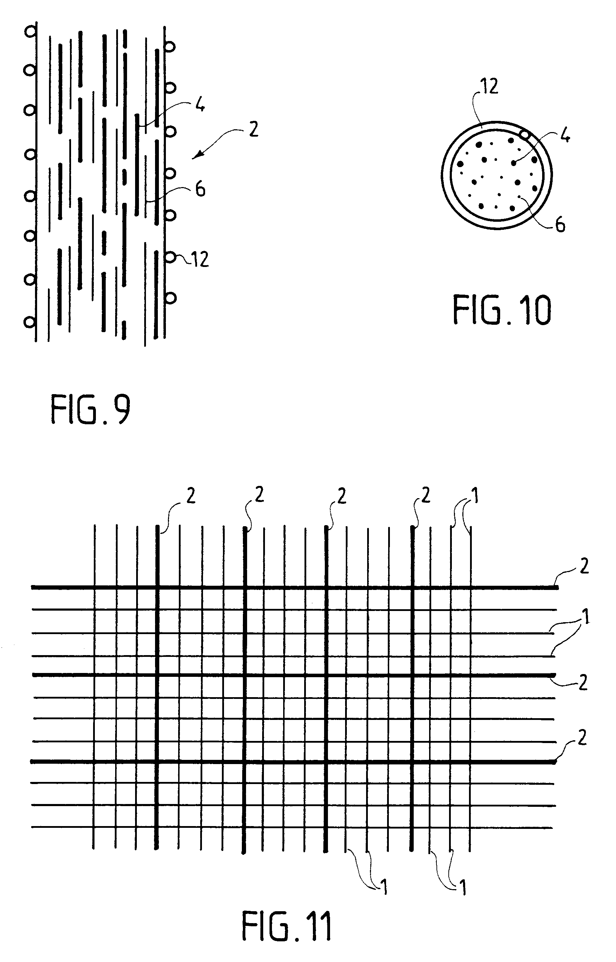

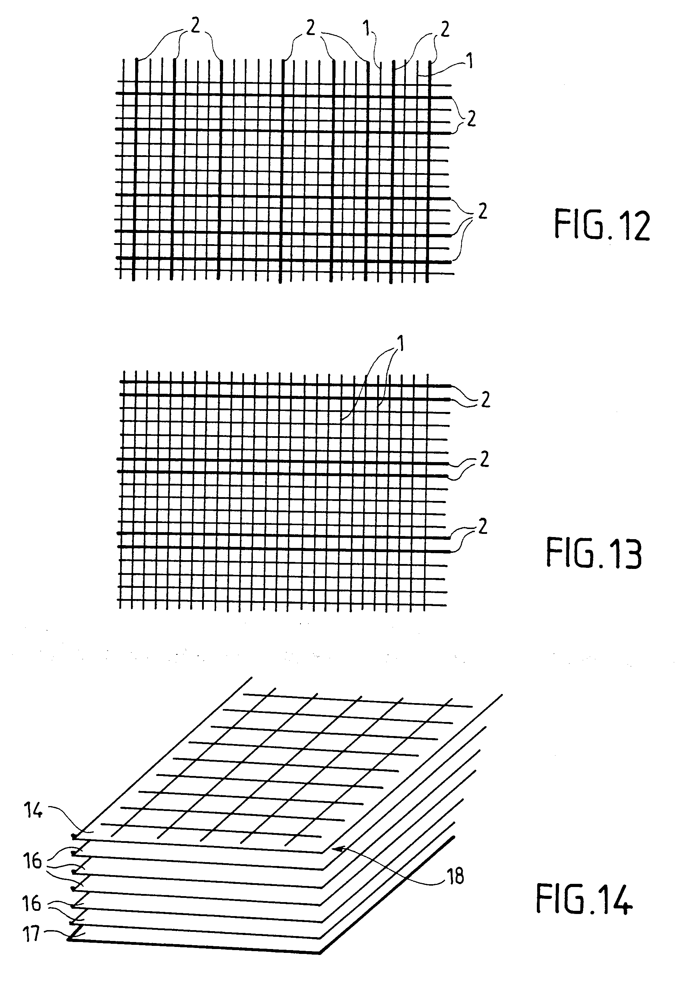

Les fils chargés 2 peuvent être régulièrement espacés, tels que représentés sur la Figure 11, ou avoir un espacement variable éventuellement reproduit périodiquement, de préférence variant régulièrement, tels que représentés sur la Figure 12. Cette répartition peut être utilisée pour les fils de chaîne et/ou pour les fils de trame.

Cette particularité rend possible la réalisation de matériau composite, incorporant le renfort textile conforme à l'invention, dont l'anisotropie peut être déterminée dans les sens chaîne et trame par le choix de pas de tissage des fils chargés différents dans l'une et l'autre de ces directions.

Dans d'autres applications, on préfère grouper plusieurs fils chargés 2, tels que représentés sur la Figure 13.

Le textile de l'invention est avantageusement utilisé pour constituer un renfort de matériau composite. Dans ce cas, des couches de textile conductrices 14 peuvent être associées à des couches isolantes 16, chaque couche conductrice 14 ou isolante 16 étant intégrée dans une matrice 18.

Des couches de textile conductrices 14 peuvent aussi être directement empilées et intégrées dans une matrice 16.

L'une de ses faces 17 peut être formée d'une couche très conductrice.

Ainsi, les propriétés électriques du matériau composite sont définies et ajustées :
- par le mélange en filature lors de la fabrication des fils chargés 2 avec un mélange de fibres discontinues conductrices 4 et de fibres discontinues non conductrices 6,
- par l'association éventuelle d'un filament minéral 10 continu ou discontinu à la mèche conductrice 8,
- par l'introduction de fils chargés 2 dans le sens longitudinal du textile et leur répartition,
- par l'introduction de fils chargés 2 dans le sens transverse du textile et leur répartition.

Pour la plupart des applications, un tel résultat peut être obtenu avec une faible concentration des éléments conducteurs constitutifs du réseau. Ainsi, la perturbation des propriétés mécaniques et thermiques du renfort est peu affectée par la présence de fils chargés.

Les applications visées concernent en priorité l'atténuation d'ondes centimétriques, pour lesquelles les pertes électriques doivent être modérées et gérées avec une très bonne précision. Elles concernent également le blindage électromagnétique et la dissipation des charges électrostatiques, pour lesquels des conductivités plus importantes sont demandées, sans toutefois nécessiter une aussi grande précision.

L'invention sera illustrée, sans aucunement être limitée, par les exemples qui suivent.

### Exemple 1

Dans cet exemple, le fil chargé 2 est un fil chargé de 136 tex composé de fibres discontinues.

Les fibres discontinues non conductrices sont des fibres de verre de type E, et les fibres conductrices sont des fibres de carbone à haute résistance.

Le fil chargé 2 est réalisé avec un mélange de 50 % de fibres de verre et 50 % de fibres de carbone.

Le tissu est un satin de 400 g/m2 entièrement réalisé avec le fil chargé. Il contient donc 200 g/m2 de fibres conductrices.

### Exemple 2

Dans cet exemple, le fil chargé 2 est un fil chargé de 200 tex composé de fibres discontinues.

Les fibres discontinues non conductrices sont des fibres de verre de type E, et les fibres conductrices sont des fibres de carbone à haute résistance.

Le fil chargé 2 est réalisé avec un mélange de 70 % de fibres de verre et 30 % de fibres de carbone.

Le tissu est un double nappé lié, réalisé sur métier trameur du type "KARL-MAYER", de masse surfacique 500 g/m2. Il est entièrement réalisé avec le fil chargé. Il contient 150 g/m2 de fibres conductrices.

### Exemple 3

Dans cet exemple, le fil chargé 2 est un fil chargé de 320 tex composé de fibres discontinues et de fibres continues.

Les fibres discontinues et continues non conductrices sont des fibres de verre de type E, et les fibres discontinues conductrices sont des fibres de carbone à haute résistance.

Le fil chargé 2 est réalisé en associant des fibres 10 de verre de type E continu de 160 tex à une mèche de 160 tex composée d'un mélange de 60 % de fibres de verre et 40 % de fibres de carbone.

Le tissu est un complexe multiaxial 0° ± 45° de 800 g/m2 entièrement réalisé avec le fil chargé. Il contient donc 160 g/m2 de fibres conductrices.

### Exemple 4

Dans cet exemple, le fil chargé 2 est un fil chargé de 136 tex composé de fibres discontinues et de fibres continues.

Les fibres discontinues et continues non conductrices sont des fibres de verre de type E, et les fibres discontinues conductrices sont des fibres de carbone à haute résistance.

Le fil chargé 2 est réalisé en associant des fibres 10 de verre de type E continu de 68 tex à une mèche de 68 tex composée d'un mélange de 96 % de fibres de verre et 4 % de fibres de carbone.

Ce fil chargé est incorporé dans un tissu de satin de 400 g/m2 comportant une base de fil silionne de 136 tex. Un fil sur trois, en chaîne comme en trame, est un fil chargé. Il contient donc 2,6 g/m2 de fibres conductrices.

### Exemple 5

Dans cet exemple, le fil chargé 2 est un fil chargé de 136 tex composé de fibres discontinues et de fibres continues.

Les fibres discontinues et continues non conductrices sont des fibres de verre de type E, et les fibres discontinues conductrices sont des fibres de carbone à haute résistance.

Le fil chargé 2 est réalisé en associant des fibres 10 de verre de type E continu de 68 tex à une mèche de 68 tex composée d'un mélange de 95 % de fibres de verre et 5 % de fibres de carbone.

Ce fil chargé est incorporé dans un tissu de sergé de 240 g/m2 comportant une base de fil silionne de 136 tex. Un fil sur huit, en chaîne comme en trame, est un fil chargé. Il contient donc 0,75 g/m2 de fibres conductrices.

### Exemple 6

Dans cet exemple, le fil chargé 2 est un fil chargé de 66 tex composé de fibres discontinues et de fibres continues.

Les fibres discontinues et continues non conductrices sont des fibres de quartz, et les fibres discontinues conductrices sont des fibres de carbone à haute résistance.

Le fil chargé 2 est réalisé en associant des fibres 10 de quartz continues de 33 tex à une mèche de 33 tex composée d'un mélange de 97 % de fibres de quartz et 3 % de fibres de carbone.

Ce fil chargé est incorporé dans un tissu taffetas de 200 g/m2 comportant une base de fil de quartz de 66 tex. Un fil sur douze, en chaîne comme en trame, est un fil chargé. Il contient donc 0,25 g/m2 de fibres conductrices.

Les textiles des exemples 1 à 3 conviennent bien à des applications, où ils sont destinés à écouler et à dissiper des charges électriques statiques ; les textiles des exemples 4 à 6 conviennent bien à des applications, dans lesquelles un coefficient de réflexion très faible à des longueurs d'ondes sélectives est recherché.

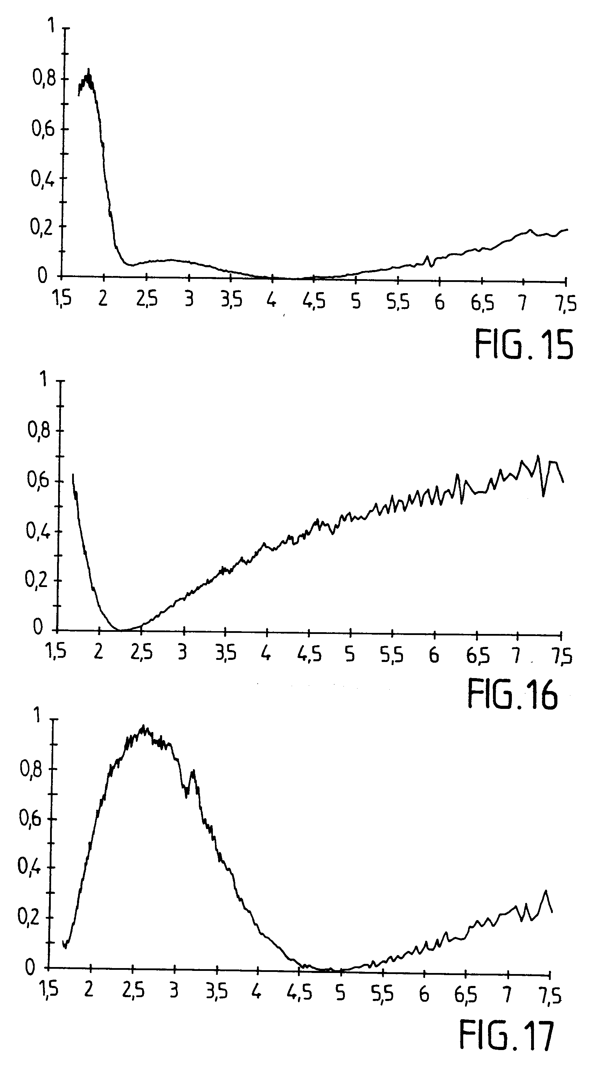

Les Figures 15 à 17 illustrent la réponse électromagnétique des textiles, décrits dans les exemples 4 à 6, lorsque ceux-ci sont intégrés dans des empilements complexes, tels que ceux de la Figure 14.

Dans ces cas, les renforts textiles de ces exemples sont des réseaux caractérisés par un pas que l'on choisit en fonction de la longueur d'onde.

La Figure 15 représente la réflectivité d'un empilement incorporant le renfort de l'exemple 6 dans la configuration suivante :
- 1 pli de l'exemple 6,
- 70 plis de tissu fil silionne de 68 tex,
- 1 pli de tissu de carbone haut module.

La Figure 16 représente la réflectivité d'un empilement incorporant le renfort de l'exemple 5 dans la configuration suivante :
- 1 pli de l'exemple 5,
- 34 plis de tissu fil silionne de 68 tex,
- 1 pli de tissu de carbone haut module.

La Figure 17 représente la réflectivité d'un empilement incorporant le renfort de l'exemple 4 dans la configuration suivante :
- 44 plis de tissu fil silionne de 68 tex,
- 1 pli de l'exemple 4,
- 47 plis de tissu fil silionne de 68 tex,
- 1 pli de tissu de carbone haut module.

Des tests comparatifs faits sur une plaque composite réalisée avec du tissu ayant une masse de 300 g/m2 et 100 % silionne d'une part, et une plaque composite de même masse réalisée avec une hybridation au tissage d'un fil sur dix d'autre part, ont donné les résultats suivants :

| Propriétés mécaniques | | Tissu 100 % silionne | Tissu silionne avec un fil hybride sur dix |
|---|---|---|---|
| Contrainte en traction | MPa | 579 | 547 |
| Module en traction | GPa | 22,5 | 21,8 |
| Contrainte en flexion | MPa | 679 | 678 |
| Module en flexion | GPa | 25,7 | 26,8 |
| Contrainte au cisaillement | MPa | 66 | 59 |

Ces résultats montrent les bonnes propriétés mécaniques du composite réalisé avec les fils hybrides.

La conductivité électrique du renfort textile de l'invention pouvant être contrôlée très précisément sans altérer de manière significative sa résistance mécanique et thermique, il peut être utilisé pour toutes les applications dans lesquelles des textiles ou des matériaux composites conducteurs présentent des avantages.

En particulier, ces textiles peuvent être utilisés, lorsque l'accumulation d'électricité statique doit être évitée. Il est connu que des accumulations d'électricité statique se produisent dans les milieux où le taux d'humidité est réduit. C'est le cas pour les salles blanches de l'industrie pharmaceutique ou informatique, les salles d'opérations des hôpitaux, les salles de production de matériels pyrotechniques. Les matériels concernés sont des pièces de capotage, des réservoirs, des bacs,....

Les garnitures internes de cellules d'avions sont avantageusement réalisées en matériau composite incorporant le renfort textile de l'invention. Cela leur donne une conductivité modérée suffisante pour écouler et dissiper les charges électriques pouvant résulter d'un court-circuit local, sans toutefois produire d'effets néfastes en un autre point.

Le renfort textile de l'invention permet la réalisation de composites conducteurs légers permettant également d'assurer la compatibilité électromagnétique pour des systèmes électroniques fonctionnant à haute fréquence.

Un autre domaine d'emploi de ces textiles est relatif à des applications à très haute fréquence.

Les Figures 15 à 17 reflètent cette utilisation, qui peut concerner par exemple, les mâts des navires, pour lesquels un revêtement sélectif en fréquence doit être interposé entre ce mât et l'émetteur radar, pour éviter l'écho direct vers le récepteur. Pour des raisons similaires, signalons également le revêtement des murs des bâtiments situés au voisinage des émetteurs de télévision.

## Revendications

1. Renfort textile à pertes électriques contrôlées comprenant :
- des fils non conducteurs (1) à base de fibres minérales assurant la résistance mécanique et thermique du textile,
- et des fils chargés (2),
caractérisé en ce que les fils chargés (2) sont constitués d'un mélange de fibres discontinues non conductrices minérales (6) et de fibres discontinues conductrices (4) approximativement parallèles, dans une proportion déterminée pour donner au textile ses propriétés électriques.

2. Renfort textile à pertes électriques contrôlées selon la revendication 1, caractérisé en ce que les fibres (4, 6) des fils chargés (2) sont tordues pour donner aux fils (2) une grande cohésion.

3. Renfort textile à pertes électriques contrôlées selon la revendication 1, caractérisé en ce que les fils chargés (2) comportent chacun deux bouts (8) assemblés par torsion, l'un au moins de ces bouts (8) étant formé d'un mélange de fibres discontinues non conductrices (6) et de fibres discontinues conductrices parallèles (4).

4. Renfort textile à pertes électriques contrôlées selon l'une quelconque des revendications 1 à 3, caractérisé en ce que les fils chargés (2) sont guipés.

5. Renfort textile à pertes électriques contrôlées selon la revendication 4, caractérisé en ce que le guipage des fils chargés (2) est réalisé par un fil de guipage (12) minéral.

6. Renfort textile à pertes électriques contrôlées selon la revendication 4, caractérisé en ce que le fil de guipage (12) a des propriétés permettant son enlèvement après formation du textile.

7. Renfort textile à pertes électriques contrôlées selon l'une quelconque des revendications 1 à 6, caractérisé en ce que les fils chargés (2) sont au moins en partie dans le sens transverse.

8. Renfort textile à pertes électriques contrôlées selon l'une quelconque des revendications 1 à 6, caractérisé en ce que les fils chargés (2) sont au moins en partie dans le sens longitudinal.

9. Renfort textile à pertes électriques contrôlées selon l'une quelconque des revendications 7 et 8, caractérisé en ce que les fils chargés (2) consécutifs sont deux à deux séparés par une distance constante.

10. Renfort textile à pertes électriques contrôlées selon l'une quelconque des revendications 7 et 8, caractérisé en ce que les fils chargés (2) consécutifs sont deux à deux séparés par une distance variant régulièrement.

11. Renfort textile à pertes électriques contrôlées selon l'une quelconque des revendications 7 à 10, caractérisé en ce que la répartition des fils chargés (2), respectivement dans le sens longitudinal et dans le sens transverse, est différente de manière à conférer au textile des propriétés anisotropes.

12. Matériau composite comportant un renfort textile noyé dans une matrice, caractérisé en ce qu'il comporte au moins une couche constituée d'un renfort textile conforme à l'une quelconque des revendications 1 à 11.

13. Matériau composite selon la revendication 12, caractérisé en ce qu'il comporte plusieurs couches de renfort textile conforme à l'une quelconque des revendications 1 à 12, associées à des couches textiles non conductrices.

14. Matériau composite selon l'une des revendications 12 et 13, caractérisé en ce que l'une de ses faces est formée d'une couche très conductrice.
